# EUROPEAN PATENT APPLICATION

(11) **EP 2 995 416 A1**
(43) Date of publication of application: **16.03.2016**
(21) Application number: 13883866.9
(22) Date of filing: 10.05.2013
(51) Int. Cl.: B23K 31/00, B23K 9/095

(54) **WELDING METHOD, WELDING SYSTEM, AND SYSTEM FOR MONITORING WELD SOLIDIFICATION CRACKING**

(71) Applicant: Hitachi, Ltd., Chiyoda-ku Tokyo 100-8280 (JP)
(72) Inventor: OGATA, Makoto, Chiyoda-ku, Tokyo 100-8280 (JP)
(74) Representative: Beetz & Partner mbB
(86) International application number: PCT/JP2013/063117
(87) International publication number: WO 2014/181458

(57) **Abstract**

Provided are a welding method, a welding system, and a weld hot cracking monitoring system that allow welding while reducing or preventing hot cracking in welds in the process of welding, basically without the need for a preliminary examination on an operation method allowing reduction or prevention of hot cracking in welds at the time of melt welding with each change in material and product shape.

In the welding process, the temperature and strain of surface of welds are measured, hot cracking in the welds is analyzed based on a base material and wire material components, welding process conditions including product and groove shapes, heat input conditions, and restraint conditions, and the measured temperature and strain of surface of the welds, and when the occurrence of hot cracking is predicted as a result of the analysis, hot cracking in the welds is analyzed with changes in the heat input conditions or the restraint conditions to find heat input conditions or restraint conditions allowing reduction or prevention of hot cracking, and heat input in the welding process or strain load applied to the base material is controlled on the found heat input conditions or restraint conditions.

## Description

### Technical Field

The present invention relates to a welding method, a welding system, and a weld hot cracking monitoring system that allow welding while preventing hot cracking in welds.

### Background Art

Welding is performed in the manufacturing processes for thermal power plants, atomic power plants, rail vehicles, and others, for example. The materials for thermal power plants, atomic power plants, and rail vehicles may include carbon steel, stainless steel, aluminum alloy, and nickel base alloy. To join the members made of these materials, a melt welding method is used to melt and solidify the materials by the use of arc or laser as a heat source.

In the case of performing melt welding, hot cracking may occur in welding metal portions as one of welding defects. It is essential for the improvement in reliability of the welds to reduce and prevent occurrence of hot cracking in the welds.

For example, PTL 1 proposes a welding temperature control method by which the temperature of the welds in an appropriate welding state is set as a standard temperature, the actual temperature of the welds is detected in real time by an infrared sensor, and power of a laser generator is brought under feedback control such that the detected temperature of the welds coincides with the standard temperature. According to this method, welding can be performed on optimum temperature conditions by the simple operation, without having to set conditions by troublesome trial and error processes.

PTL 2 proposes a welding-related measurement method by which information on strain behavior of welded materials immediately after solidification and hot cracking and phase transformation involved in the strain is acquired in real time, and for evaluation of weldability of the materials and improvement of reliability of the welding, laser beams are emitted to the portions of the welds being melted and solidified or the thermally affected neighborhood portions of the welds, so that the amount of strain is dynamically measured from a change in speckle pattern.

### Citation List

### Patent Literatures

PTL 1: JP 2000-218383 A
PTL 2: JP 2000-39308 A

### Summary of Invention

### Technical Problem

According to the method described in PTL 1, the welding temperature is controlled under the assumption that the upper and lower limits for the standard temperature for appropriate welding are determined by work material regardless of the shape, size, and the like of the work. In recent welding processes, however, there has been a growing trend toward diverse materials and complicated product shapes. In accordance with this trend, the welding temperature control based on the standard temperature may be insufficient. It is thus necessary to examine a technique for reducing and preventing hot cracking in welds in each of the welding processes. The examination on a technique for reducing and preventing hot cracking in welds would require lots of time and costs.

According to the method described in PTL 2, strain is dynamically detected to determine discontinuities or the like in a strain change curve representing time changes in the amount of strain and identify hot cracking in welds. However, the method of PTL 2 is intended to evaluate weldability (quality assurance of welded products) but is not designed to reduce hot cracking based on the measurement results.

An object of the present invention is to provide a welding method, a welding system, and a weld hot cracking monitoring system that allow welding while reducing or preventing hot cracking in welds in the process of welding, basically without the need for a preliminary examination on an operation method allowing reduction or prevention of hot cracking in welds at the time of melt welding with each change in material and product shape.

### Solution to Problem

According to the present invention, in the welding process, the temperature and strain of surface of welds are measured, hot cracking in the welds is analyzed based on a base material and wire material components, welding process conditions including product and groove shapes, heat input conditions, and restraint conditions, and the measured temperature and strain of surface of the welds, and when occurrence of hot cracking is predicted as a result of the analysis, hot cracking in the welds is analyzed with changes in the heat input conditions or the restraint conditions to find heat input conditions or restraint conditions allowing reduction or prevention of hot cracking, and heat input in the welding process or strain load applied to the base material is controlled on the found heat input conditions or restraint conditions.

### Advantageous Effects of Invention

According to the present invention, it is possible to perform welding while reducing or preventing hot cracking in welds in the process of welding with any material and any product shape, without the need for a preliminary examination on an operation method allowing reduction or prevention of hot cracking in welds at the time of melt welding with each change in material and product shape.

The other issues, configurations, and advantages will be clarified by the following descriptions of embodiments.

### Brief Description of Drawings

[FIG. 1] FIG. 1 is a schematic view of a welding system as an example of the present invention.
[FIG. 2] FIG. 2 is a schematic view of the welding system as the example of the present invention.
[FIG. 3] FIG. 3 is a diagram illustrating an example of a device configuration for measuring the temperature and strain used in the example of the present invention.
[FIG. 4] FIG. 4 is a diagram illustrating vertical hot cracking in welds that may occur at the time of melt welding.
[FIG. 5] FIG. 5 is a diagram describing lateral hot cracking in welds that may occur at the time of melt welding.
[FIG. 6] FIG. 6 is a diagram describing a technique for predicting hot cracking in welds according to a welding method as an example of the present invention.
[FIG. 7] FIG. 7 is a diagram describing a weld hot cracking control in the welding system as the example of the present invention.
[FIG. 8] FIGS. 8(1) to 8(4) are diagrams describing a mechanism of hot cracking in welds.

### Description of Embodiments

An example of the present invention will be described with reference to the accompanying drawings.

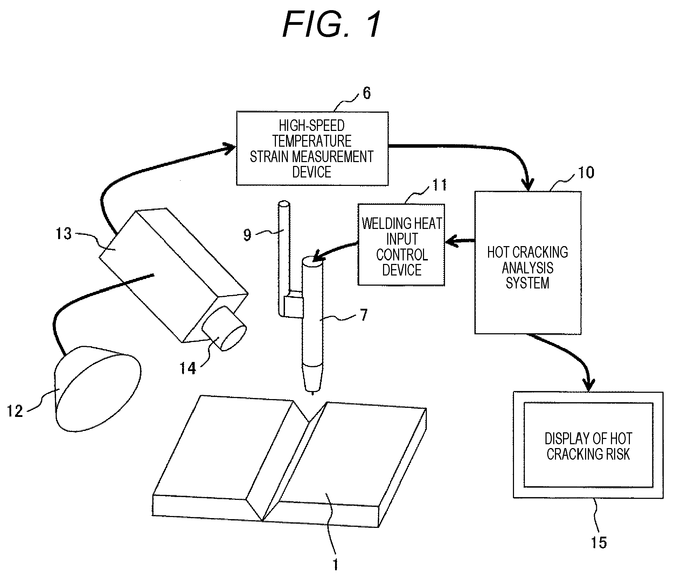

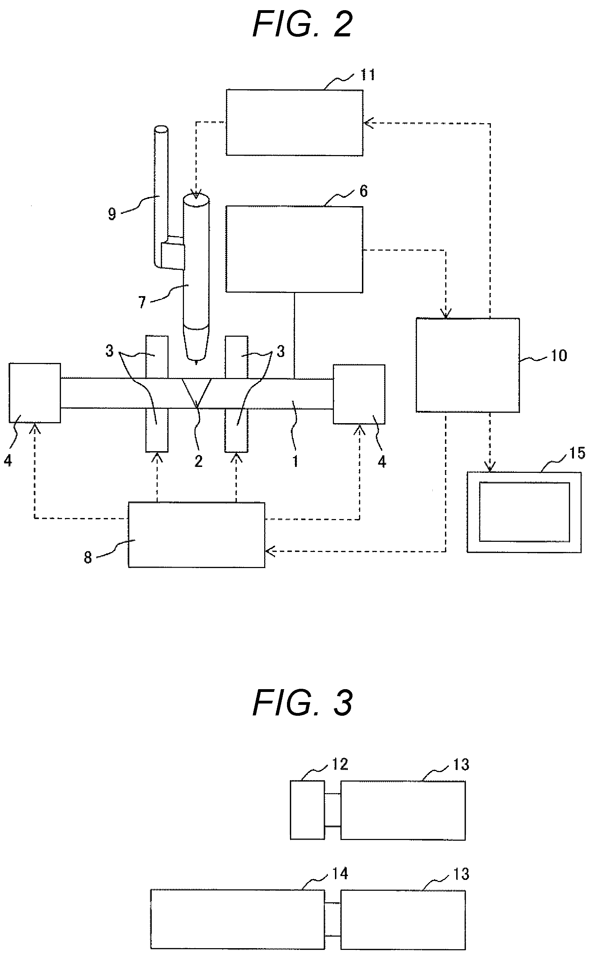

A welding system in an example of the present invention will be briefly explained with reference to FIGS. 1 and 2.

FIG. 1 illustrates a welding system for performing arc welding of a base material 1 by the use of a welding torch 7 and a wire feeder 9. A high-speed temperature strain measurement device 6 is installed to monitor the temperature and strain status on the surface of welds. The high-speed temperature strain measurement device 6 includes a high-speed camera 13, and a thermometer 12 and a high-power lens 14 attached to the high-speed camera 13. The measurement values of temperature and strain obtained by the high-speed temperature strain measurement device 6 are incorporated into a hot cracking analysis system 10 for use in a hot cracking analysis described later. The hot cracking analysis system 10 analyzes hot cracking. In addition, when occurrence of hot cracking is predicted, the hot cracking analysis system 10 carries out an inverse analysis of heat input conditions allowing reduction or prevention of hot cracking and outputs analysis results to a welding heat input control device 11. The welding heat input control device 11 controls heat input into the welding torch 7. The results of the analysis by the hot cracking analysis system are also displayed on a monitor display 15.

FIG. 2 also illustrates a welding system for performing arc welding of the base material 1 by the use of the welding torch 7 and the wire feeder 9. In the welding system illustrated in FIG. 2, in addition to the components illustrated in FIG. 1, a vertical strain restraint jig 3 is disposed on both sides of a welding metal portion 2 along a width direction, and a lateral strain restraint jig 4 is disposed at ends of the base material 1 along a width direction. The vertical strain restraint jig 3 and the lateral strain restraint jig 4 are configured to apply strain loads to the base material 1 to adjust the magnitude and distribution of strain under control commands from a welding strain control device 8. When occurrence of hot cracking is predicted, the hot cracking analysis system 10 carries out an inverse analysis of strain load conditions allowing reduction or prevention of hot cracking, and outputs analysis results to the welding strain control device 8. FIG. 2 does not illustrate the high-speed camera 13 and others in the high-speed temperature strain measurement device 6 that monitors the temperature and strain status on the surfaces of the welding metal portion 2 and the base material 1.

FIGS. 1 and 2 illustrate the case of a one-layer single-side welding structure. However, the present invention is also applicable to a multi-layer double-side welding structure.

The high-speed temperature strain measurement device 6 includes the high-speed camera 13 and the thermometer (for example, a dichroic ratio measurement unit) 12, and the high-speed camera 13 and the high-power lens 14, as illustrated in FIG. 3. The thermometer may be an optical fiber thermocouple or the like. The high-power lens 14 may be a lens with a magnification of about 500 to 1000, for example. The information obtained by the thermometer 12 and the high-speed camera 13 is processed at the high-speed temperature strain measurement device 6 to determine the temperatures (temperature distribution) of the surfaces of the base material 1 and the welding metal portion 2. The information obtained by the high-power lens 14 and the high-speed camera 13 is also processed at the high-speed temperature strain measurement device 6. That is, the high-speed temperature strain measurement device 6 uses dendrite asperities on the surface of the welding metal portion 2 as a marking to acquire spatial displacements of the surface dendrite asperities at a high speed, thereby to measurement strains (strain distribution) on the surfaces of the base material 1 and the welding metal portion 2.

Conventionally, the temperature and strain of welds have been measured in a preliminary examination to decide the operation method and the welding conditions. However, it has not been contemplated that adjustments would be made to the conditions for heat input and restraint of a base material in the welding process, based on the temperature and strain measured during the welding process. In addition, with regard to a technique for predicting occurrence of hot cracking, no approach has been adopted to obtain the optimum temperature and strain allowing reduction of hot cracking at the time of melt welding with any material and any product shape.

In the present invention, welding conditions are not preliminarily examined each time the base material or the product shape is changed. The present invention provides a welding method under an entirely new concept that the occurrence of hot cracking is predicted by a plurality of analysis techniques in combination, based on the temperature and strain of welds measured during the welding process and welding process conditions, and heat input and strain load are adjusted to reduce or prevent occurrence of hot cracking.

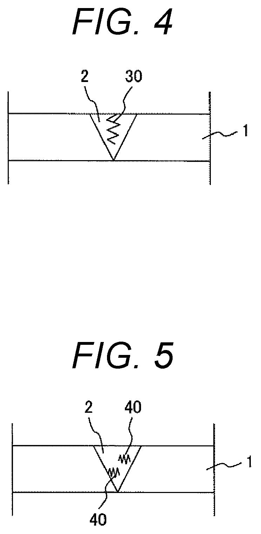

As hot cracking in welds, vertical hot cracking 30 illustrated in FIG. 4 and lateral hot cracking 40 illustrated in FIG. 5 may occur inside the welding metal portion 2. Meanwhile, the high-speed temperature strain measurement device 6 is capable of measuring the temperature and strain of the surfaces of the base material 1 and the welding metal portion 2 but is incapable of obtaining information on the temperature and strain inside the base material 1 and the welding metal portion 2 with possibility of occurrence of hot cracking.

Accordingly, in the present invention, occurrence of hot cracking inside welds is predicted based on the information on the temperature and strain of the surfaces of the welding metal portion and the base material, and welding process conditions.

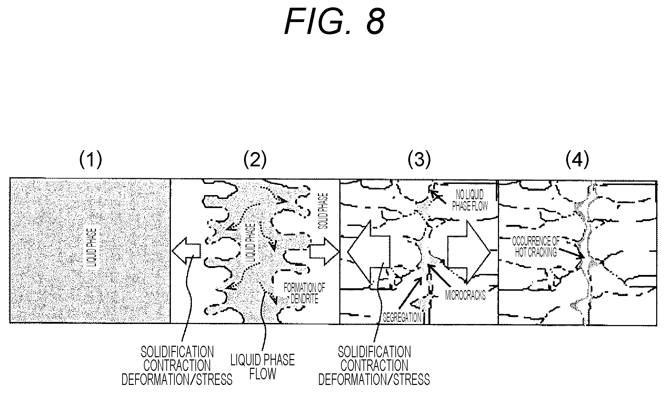

First, a mechanism for occurrence of hot cracking will be described. It is considered that hot cracking occurs in the process of solidification from a liquid phase to a solid phase illustrated in FIGS. 8(1) to 8(4). In the present invention, occurrence of hot cracking is predicted (analyzed) with consideration given to the hot cracking occurrence mechanism.
(1) The metal is in liquid state at a high temperature.
(2-1) When the metal transforms from a liquid phase to a solid phase in the cooling process, the solid phase grows with formation of protrusions called dendrites.
(2-2) When the metal transforms from a liquid phase to a solid phase, solidification contraction occurs because the solid phase is larger in density than the liquid phase, thereby generating deformation/stress.
(2-3) The liquid phase flows into the area deformed due to the solidification contraction to fill the gaps.
(3-1) As the solidification further progresses, a phenomenon called segregation in which impurities in the material components concentrate to a liquid phase to decrease the solidification completion temperature of the liquid phase. Accordingly, the liquid phase does not completely turn into the solid phase but partially exists as a residual liquid phase.
(3-2) The material exhibits a complicated solidified structure. Accordingly, the liquid phase flow becomes difficult, resulting in formation of cavities.
(3-3) In the state (3-2), when the large deformation/stress due to the solidification contraction exceeds interfacial energy (adhesive power) between the solid phase and the residual liquid phase, the cavities grow into microcracks.
(4) The microcracks further grow into hot cracking observed in a macroscopic manner.

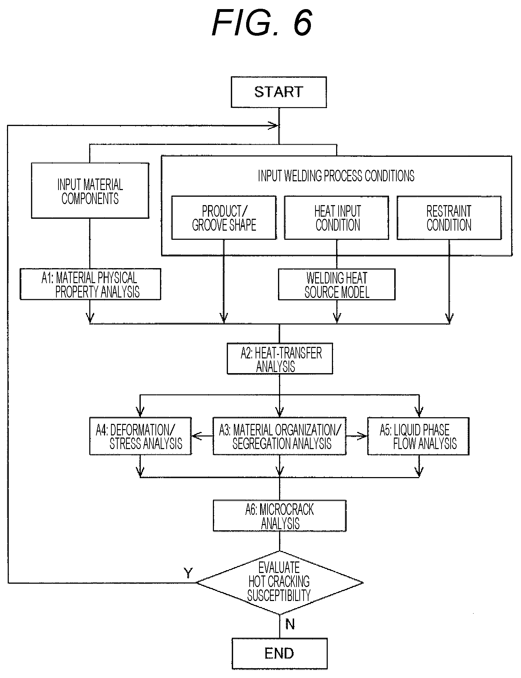

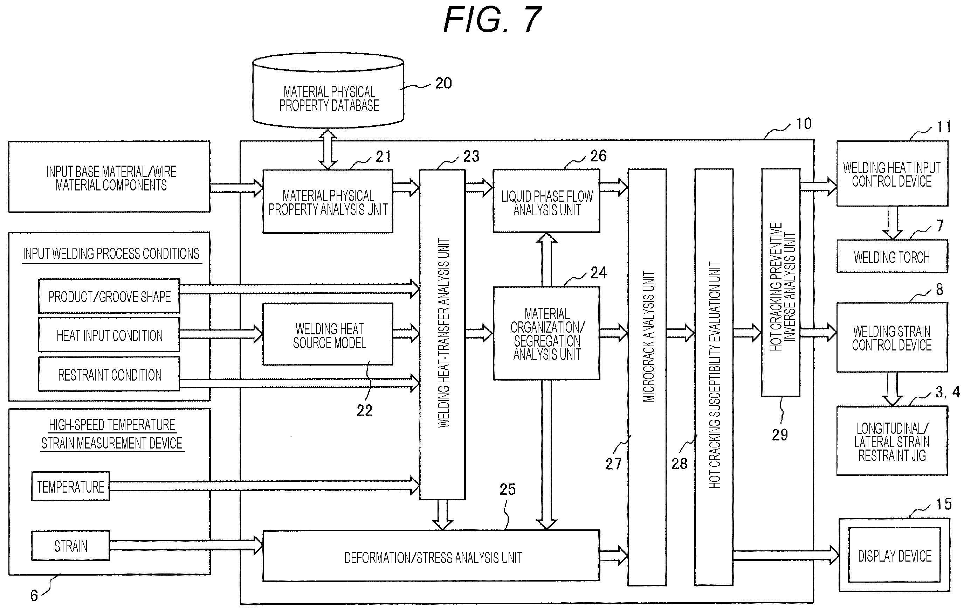

In the present invention, a hot cracking analysis illustrated in FIGS. 6 and 7 is carried out with consideration given to the hot cracking occurrence mechanism.

FIG. 6 is a flowchart of a hot cracking prediction technique. FIG. 7 illustrates the details of the hot cracking analysis system and an entire system configuration for adjusting heat input to the welding torch and strain load to the base material based on the analysis by the hot cracking analysis system.

The hot cracking analysis system 10 has a material physical property value analysis unit 21, a welding heat source model 22, a welding heat transfer analysis unit 23, a material organization/segregation analysis unit 24, a deformation/stress analysis unit 25, a liquid phase flow analysis unit 26, a microcrack analysis unit 27, a hot cracking susceptibility evaluation unit 28, and a hot cracking prevention analysis unit 29. Existing analysis software or the like is used in each of these analysis units.

An operator inputs in advance information on material components and welding process conditions into the hot cracking analysis system 10. In addition, the operator inputs information on the temperatures and strains of a welding metal portion and a base material through the high-speed temperature strain measurement device 6 at the time of execution of a welding process.

As the material components, the base material 1 and welding wire material components fed from the wire feeder 9 are input.

As the welding process conditions, product/groove shapes, heat input conditions, and restraint conditions except for restraint by the vertical strain restraint jig 3 and the lateral strain restraint jig 4 are input. The heat input conditions are heat input (current and voltage), torch feed speed, and the like. Heat sources such as arc, laser, electronic beam, energization, and friction can be simulated through existing welding heat source models.

In the hot cracking analysis system 10, the individual analysis units basically conduct analyses A1 to A6 illustrated in FIG. 6 in cooperation with one another based on the foregoing input information. The hot cracking analysis system 10 is characterized by conducting the analyses in a cooperative manner, although the analytical operations are performed by the use of existing analysis software.

In the material physical property value analysis A1, when the information on the base material and wire material components is input, thermal and mechanical physical property values are calculated and used in the analyses A2 to A6. The material physical property value analysis is conducted by the use of physical property calculation software "JmatPro" (produced by Sente Software Ltd. in the UK) or the like. The physical property values necessary for hot cracking analysis information, such as density, specific heat, thermal conductivity, latent heat, stress-strain curve, Young's modulus, Poisson's ratio, and linear expansion coefficient, for example, can be obtained from a material physical property database 20. Instead of incorporating the material physical property value analysis A1 in the hot cracking analysis system 10, the analysis may be separately conducted and analysis results may be input into the hot cracking analysis system.

In the heat transfer analysis A2, heat transfer analysis is carried out on the welding process conditions including product and groove shape data, heat input conditions such as heat source type, power, and feed speed, and jig restraint and the like as boundary conditions. In addition, the heat transfer analysis is conducted based on the temperature of surface of the welds as a boundary condition. Specifically, the welding heat transfer analysis is carried out based on the physical property values obtained by the material physical property value analysis with inputting of the material component data, the welding heat source model obtained with inputting of the heat input conditions, product/groove shapes, heat removal by the restraint jigs obtained with inputting of the restraint conditions, dissolution between the base material 1 and the welding metal portion 2, and the surface temperature information obtained by the high-speed temperature strain measurement device 6 as boundary conditions. By the heat transfer analysis, the temperature (temperature distribution) of the inside of the welding metal portion 2, the cooling speed, the temperature gradient can be obtained. Existing analysis software is also used in the heat transfer analysis.

In the material organization/segregation analysis A3, an analysis of solidified organization, segregation, and phase transformation is conducted based on the temperature, the cooling speed, and the temperature gradient obtained by the heat transfer analysis A2. Specifically, using the results of the welding heat transfer analysis and the information on the material components, an analysis is executed by a phase-field method such as "MICRESS" (produced by Access e.V. in Germany) or a thermodynamic calculation such as "Thermo-Calc" (produced by Thermo-Calc Software AB in Sweden) to obtain information on liquidus-line temperature, solidification completion temperature resulting from segregation, a primary dendrite arm, a secondary dendrite arm, and the area width of a residual liquid phase resulting from segregation. The phase-field method requires a large amount of analysis time. To easily reflect the analysis results on the in-process control, an information data library may be prepared for later use, including the liquidus-line temperature with temperature gradient and cooling speed as variables, solidification completion temperature resulting from segregation, the primary dendrite arm, the secondary dendrite arm, the area width of a residual liquid phase resulting from segregation.

In the deformation/stress analysis A4, an analysis of deformation/stress (illustrated in FIGS. 8 (2) and 8(3)) is conducted by a thermoviscoelastic plastic method during the transition from a solid-liquid coexisting state to an ambient temperature state, based on the information on the temperature (temperature distribution) obtained by the heat transfer analysis A2 and the phase transformation obtained by the material organization/segregation analysis A3. In addition, the deformation/stress analysis is carried out based on strain of the surface of the welds as a boundary condition. Specifically, the thermoviscoelastic plastic analysis is conducted by a finite element method based on the temperature distribution obtained by the heat transfer analysis, the information on phase transformation obtained by the material organization/segregation analysis, and the strain status in a solid-liquid coexisting area on the surface of the welding metal portion and the base material obtained by the high-speed temperature strain measurement device 6 as boundary conditions, thereby to obtain deformation and stress distribution in the inside of the base material 1 and the welding metal portion 2 at the time of welding.

In the liquid phase flow analysis A5, a liquid phase flow analysis is conducted based on the temperature obtained by the heat transfer A2 and the solidified organization shape obtained by the material organization/segregation analysis A3. Specifically, the behavior of a liquid phase flowing in the solidified organization (liquid phase flow illustrated in FIG. 8(2) and 8(3)) is analyzed under Darcy flow rules, with inputting of the liquidus-line temperature, the solid completion temperature resulting from segregation, first dendrite arm, second dendrite arm, and the area width of a residual liquid phase resulting from segregation.

In the microcrack analysis A6, a cavity/microcrack analysis of an interfacial surface between a solid phase and a liquid phase (illustrated in FIG. 8(3)) is conducted by the use of a final solidification temperature resulting from segregation and the shape of a micro segregated portion obtained by the material organization/segregation analysis A3, the deformation/stress obtained by the deformation/stress analysis A4, and the liquid phase flow behavior obtained by the liquid phase flow analysis A5, thereby calculating hot cracking susceptibility. Specifically, the occurrence of solid-liquid coexisting cracking is predicted by a liquid-phase pressure decrease analysis method from a pressure decrease in the organization occurring when an unsolidified liquid phase becomes solidified while flowing in the solidified organization, based on the information on the solidification completion temperature obtained by the material organization/segregation analysis A3, the primary dendrite arm, the secondary dendrite arm, the shape data of a micro segregated portion such as the area width of a residual liquid phase resulting from segregation, the deformation behavior and stress state of the solid-liquid coexisting area obtained by the deformation/stress analysis A4, and the liquid-phase flow behavior in the solidified organization obtained by the liquid-phase flow analysis A5. In addition, the stress and the interfacial energy as adhesive power between the solidified solid phase and the unsolidified liquid phase are compared to each other by the use of Young-Laplace relational expression, and crack progress is predicted from the difference between the two to determine the probability of occurrence of hot cracking. The probability of occurrence of hot cracking becomes higher when the deformation/stress resulting from solidification and contraction is larger than the interfacial energy (adhesive power) between the solid phase and the residual liquid phase.

By performing the analyses A1 to A6 in cooperation as described above, the probability of occurrence of hot cracking is obtained, and the position of hot cracking possibly occurring in the welding metal portion 2 and the probability of occurrence of hot cracking when the welding process is continuously carried out on the current welding process conditions are output as analysis results.

The hot cracking susceptibility evaluation unit 28 determines whether the probability of occurrence of hot cracking is equal to or higher than a predetermined probability of occurrence of hot cracking.

When the probability of occurrence of hot cracking is equal to or higher than the predetermined probability of occurrence of hot cracking, that is, when hot cracking is considered to occur, the analyses of hot cracking in the welding metal portion with changes in heat input conditions and/or restraint conditions are carried out in parallel, thereby to perform an inverse analysis for finding heat input conditions or restraint conditions allowing reduction or prevention of hot cracking (hot cracking prevention inverse analysis). Specifically, when hot cracking is considered to occur, welding hot cracking analyses are conducted in parallel with increases and decreases in heat input amount, feed speed, and strain amount. The hot cracking prevention inverse analysis unit 29 sorts out the heat input amounts, feed speeds, and strain amounts resulting in welding hot cracking obtained by a response aspect method or the like, thereby to find the heat input amount, feed speed, and strain amount that lower the probability of occurrence of hot cracking. The hot cracking prevention inverse analysis unit 29 also outputs the temperature distribution and strain distribution on the conditions of the heat input amount, feed speed, and strain amount that lower the probability of occurrence of hot cracking or prevent occurrence of hot cracking.

The heat input conditions and/or restraint conditions determined by the hot cracking prevention inverse analysis are output to the welding heat input control device 11 and/or the welding strain control device 8 to control heat input in the welding process and/or application of strain load to the base material.

When it is determined that no hot cracking will occur in the hot cracking susceptibility evaluation, next hot cracking analysis is performed at predetermined intervals to make a hot cracking susceptibility evaluation. The interval is 0.01 to 0.001 second, for example. The interval can be supported by the rate (fps) of the high-speed camera (in general, 10000 fps: 0.0001 second).

The welding heat input control device 11 outputs to the welding torch 7 a signal for controlling the heat input amount (current and voltage) and torch feed speed to attain the heat input conditions allowing reduction or prevention of hot cracking obtained by the hot cracking prevention inverse analysis unit 29. Accordingly, the temperature distribution preventing the occurrence of hot cracking can be provided.

The welding strain control device 8 provides control commands to the vertical strain restraint jig 3 and the lateral strain restraint jig 4 adjusting the amount of strain load applied to the base material to satisfy the restraint conditions allowing reduction or prevention of hot cracking obtained by the hot cracking prevention inverse analysis unit 29. Accordingly, the strain distribution preventing the occurrence of hot cracking can be provided.

When the growth direction of the dendrite observed by the high-speed temperature strain measurement device 6 is vertical to the thick direction of the base material 1 and is horizontal in the width direction of the base material 1, the base material 1 is moved by the lateral strain restraint jig 4 to be shrunk in the width direction (strain load is applied to the base material 1 in the compression strain direction).

When the growth direction of the dendrite observed by the high-speed temperature strain measurement device 6 is parallel to the thick direction of the base material 1 and is vertical to the width direction of the base material 1, the base material 1 is moved by the vertical strain restraint jig 3 to be shrunk in the thick direction (strain load is applied to the base material 1 in the compression strain direction).

According to this example, hot cracking in welds is analyzed based on the welding process conditions, and the measured temperature and strain of the surface of the welds to find the heat input conditions and restraint conditions allowing reduction or prevention of hot cracking, and heat input in the welding process or strain load to the base material are controlled based on the found heat input conditions or restraint conditions. Accordingly, it is possible to perform welding while reducing or preventing hot cracking at the time of welding with any material or any product shape, without the need of a preliminary examination on operation method allowing reducing or preventing hot cracking at the time of melt welding each time the material or the product shape is changed.

The present invention is not limited to the foregoing example but includes various other modifications. For example, the foregoing example is taken for describing the details of the present invention in an easy-to-understand manner, but the present invention may not necessarily include all of the foregoing components. In addition, some of components in one example may be replaced with some of components in another example, and a component in one example may be added to another example. Further, some of components in each of the examples may be deleted or replaced by those in another example or may include some components in another example.

### Reference Signs List

- 1: Base material
- 2: Welding metal portion
- 3: Vertical strain restraint jig
- 4: Lateral strain restraint jig
- 6: High-speed temperature strain measurement device
- 7: Welding torch
- 8: Welding strain control device
- 9: Wire feeder
- 10: Hot cracking analysis system
- 11: Welding heat input control device
- 12: Thermometer
- 13: High-speed camera
- 14: High-power lens
- 15: Monitor display
- 20: Material physical property database
- 21: Material physical property value analysis unit
- 22: Welding heat source model
- 23: Welding heat transfer analysis unit
- 24: Material organization/segregation analysis unit
- 25: Deformation/stress analysis unit
- 26: Liquid phase flow analysis unit
- 27: Microcrack analysis unit
- 28: Hot cracking susceptibility evaluation unit
- 29: Hot cracking prevention analysis unit

## Claims

1. A welding method, comprising:
measuring the temperature and strain of surface of welds;
analyzing hot cracking in the welds based on a base material and wire material components, welding process conditions including product and groove shapes, heat input conditions, and restraint conditions, and the measured temperature and strain of surface of the welds;
when the occurrence of hot cracking is predicted as a result of the analysis, analyzing hot cracking in the welds with changes in the heat input conditions or the restraint conditions to find heat input conditions or restraint conditions allowing reduction or prevention of hot cracking; and
performing welding while controlling heat input in welding or strain load applied to the base material on the found heat input conditions or restraint conditions.

2. The welding method according to claim 1, wherein
the analysis of hot cracking in the welds includes a welding heat transfer analysis, a material organization/segregation analysis, a deformation/stress analysis, a liquid phase flow analysis, a microcrack analysis, and a hot cracking susceptibility evaluation,
in the welding heat transfer analysis, a welding heat transfer analysis is carried out based on physical property values of the base material and the wire material, the welding process conditions, and the information on the measured temperature of surface of the welds as boundary conditions to obtain the temperature, cooling speed, and temperature gradient of inside of the welding metal,
in the material organization/segregation analysis, an analysis of solidified organization, segregation, and phase transformation is carried out based on the temperature, the cooling speed, and the temperature gradient obtained by the welding heat transfer analysis to obtain the final solidification completion temperature and the shape of a micro segregated portion resulting from segregation,
in the deformation/stress analysis, a thermoviscoelastic plastic analysis is conducted based on the temperature obtained by the welding heat transfer analysis, the information on the phase transformation analyzed by the material organization/segregation analysis, and the measured strain as boundary conditions to obtain deformation and stress distribution in the inside of the welds,
in the liquid phase flow analysis, the behavior of a liquid phase flowing in the solidified organization based on the temperature obtained by the welding heat transfer analysis and the shape of the micro segregated portion obtained by the material organization/segregation analysis,
in the microcrack analysis, a microcrack analysis is performed on an interfacial surface between a solid phase and a liquid phase based on the final solidification temperature and the shape of the micro segregated portion resulting from segregation obtained by the material organization/segregation analysis, the deformation/stress obtained by the deformation/stress analysis, and the liquid phase flow behavior obtained by the liquid phase flow analysis to predict the progress of microcrack and calculate the probability of occurrence of hot cracking, and
in the hot cracking susceptibility evaluation, the occurrence of hot cracking is predicted based on the probability of occurrence of hot cracking obtained by the microcrack analysis.

3. A welding system, comprising:
a welding torch;
a wire feeder;
a welding heat input control device that controls the amount of heat input to the welding torch and the torch feed speed;
a measurement device that measures the temperature and strain of surface of welds; and
a hot cracking analysis system that analyzes hot cracking in welds based on the temperature and strain measured by the measurement device and welding process conditions, wherein
the hot cracking analysis system analyzes hot cracking in the welds based on a base material and wire material components, the welding process conditions including product and groove shapes, heat input conditions, and restraint conditions, and the temperature and strain measured by the measurement device, and when the occurrence of hot cracking is predicted by the analysis, the hot cracking analysis system analyzes hot cracking in the welds with changes in the heat input conditions to perform an inverse analysis of heat input conditions allowing reduction or prevention of hot cracking, and then outputs the heat input conditions allowing reduction or prevention of hot cracking found by the inverse analysis to the welding heat input control device.

4. The welding system according to claim 3, comprising:
a strain restraint device that applies strain load to the base material; and
a welding strain control device that controls the amount of strain load applied by the strain restraint device to the base material, wherein
when the occurrence of hot cracking is predicted by the analysis, the hot cracking analysis system analyzes hot cracking in welds with changes in the heat input conditions and/or restraint conditions of the strain restraint device to perform an inverse analysis of heat input conditions and/or restraint conditions allowing reduction or prevention of hot cracking, and then outputs the heat input conditions and/or the restraint conditions allowing reduction or prevention of hot cracking found by the inverse analysis to the welding heat input control device and/or the welding strain control device.

5. The welding system according to claim 4, wherein
the strain restraint device has a vertical strain restraint jig provided on both sides of a welding metal portion along a width direction and a lateral strain restraint jig provided at ends of a base material along a width direction.

6. The welding system according to claim 5, wherein
the hot cracking analysis system includes a material physical property value analysis unit, a welding heat source model, a welding heat transfer analysis unit, a material organization/segregation analysis unit, a deformation/stress analysis unit, a liquid phase flow analysis unit, a microcrack analysis unit, a hot cracking susceptibility evaluation unit, and a hot cracking prevention analysis unit,
the welding heat transfer analysis unit carries out a welding heat transfer analysis based on physical property values of the base material and the wire material, the welding process conditions including the data on product and groove shapes, heat input conditions such as the kind and power of a heat source and feed speed, and conditions for restraint of the base material, and the information on the temperature of surface of the welds measured by the measurement device as boundary conditions to obtain the temperature, cooling speed, and temperature gradient of inside of the welding metal,
the material organization/segregation analysis unit performs an analysis of solidified organization, segregation, and phase transformation based on the temperature, the cooling speed, and the temperature gradient obtained by the welding heat transfer analysis unit to obtain the final solidification completion temperature and the shape of a micro segregated portion resulting from segregation,
the deformation/stress analysis unit conducts a thermoviscoelastic plastic analysis based on the temperature obtained by the welding heat transfer analysis unit, the information on the phase transformation analyzed by the material organization/segregation analysis unit, and the measured strain by the measurement device as boundary conditions to obtain deformation and stress distribution in the inside of the welds,
the liquid phase flow analysis unit analyzes the behavior of a liquid phase flowing in the solidified organization based on the temperature obtained by the welding heat transfer analysis unit and the shape of the micro segregated portion obtained by the material organization/segregation analysis unit,
the microcrack analysis unit performs a microcrack analysis on an interfacial surface between a solid phase and a liquid phase based on the final solidification temperature and the shape of the micro segregated portion resulting from segregation obtained by the material organization/segregation analysis unit, the deformation/stress obtained by the deformation/stress analysis unit, and the liquid phase flow behavior obtained by the liquid phase flow analysis unit to calculate hot cracking susceptibility, and performs the microcrack analysis on the interfacial surface between the solid phase and the liquid phase to predict the progress of microcrack and calculate the probability of occurrence of hot cracking,
the hot cracking susceptibility evaluation unit predicts the occurrence of hot cracking based on the probability of occurrence of hot cracking obtained by the microcrack analysis, and
when the hot cracking susceptibility evaluation unit determines that hot cracking will occur, the hot cracking prevention analysis unit carries out a hot cracking analysis with changes in the heat input conditions and/or the restraint conditions to perform an inverse analysis of heat input conditions or restrain conditions allowing reduction or prevention of hot cracking.

7. A welding hot cracking monitoring system, comprising:
a measurement device that measures the temperature and strain of surface of welds; and
a hot cracking analysis system that analyzes hot cracking in the welds based on the temperature and strain measured by the measurement device and welding process conditions, wherein
the hot cracking analysis system includes a welding heat transfer analysis unit, a material organization/segregation analysis unit, a deformation/stress analysis unit, a liquid phase flow analysis unit, a microcrack analysis unit, and a hot cracking susceptibility evaluation unit,
the welding heat transfer analysis unit carries out a welding heat transfer analysis based on physical property values of a base material and a wire material, data on product and groove shapes as the welding process conditions, heat input conditions such as the kind and power of a heat source and feed speed, conditions for restraint of the base material, and information on the temperature of the surface of the welds measured by the measurement device as boundary conditions to obtain the temperature, cooling speed, and temperature gradient of inside of the welding metal,
the material organization/segregation analysis unit performs an analysis of solidified organization, segregation, and phase transformation based on the temperature, the cooling speed, and the temperature gradient obtained by the welding heat transfer analysis unit to obtain the final solidification completion temperature and the shape of a micro segregated portion resulting from segregation,
the deformation/stress analysis unit conducts a thermoviscoelastic plastic analysis on the temperature obtained by the welding heat transfer analysis unit, the information on the phase transformation analyzed by the material organization/segregation analysis unit, and the strain measured by the measurement device as boundary conditions to obtain deformation and stress distribution in the inside of the welds,
the liquid phase flow analysis unit analyzes the behavior of a liquid phase flowing in the solidified organization based on the temperature obtained by the welding heat transfer analysis unit and the shape of the micro segregated portion obtained by the material organization/segregation analysis unit,
the microcrack analysis unit performs a microcrack analysis on an interfacial surface between a solid phase and a liquid phase based on the final solidification temperature and the shape of the micro segregated portion resulting from segregation obtained by the material organization/segregation analysis unit, the deformation/stress obtained by the deformation/stress analysis unit, and the liquid phase flow behavior obtained by the liquid phase flow analysis unit to predict the progress of microcrack and calculate the probability of occurrence of hot cracking, and
the hot cracking susceptibility evaluation unit predicts the occurrence of hot cracking based on the probability of occurrence of hot cracking obtained by the microcrack analysis unit.
